# EUROPÄISCHE PATENTSCHRIFT

(11) **EP 0 764 770 B1**
(45) Veröffentlichungstag und Bekanntmachung des Hinweises auf die Patenterteilung: **12.07.2000**
(21) Anmeldenummer: 96114196.7
(22) Anmeldetag: 04.09.1996
(51) Int. Cl.: F01L 3/22, F02F 1/42, F02B 31/00, F01L 3/06, F01L 13/00

(54) **Hubkolbenbrennkraftmaschine mit wenigstens einem Zylinder**
Internal combustion piston engine with at least one cylinder
Moteur à combustion interne à piston avec au moins un cylindre

(30) Priorität: 21.09.1995 DE 19535147
(43) Veröffentlichungstag der Anmeldung: 26.03.1997
(73) Patentinhaber: META MOTOREN- UND ENERGIE-TECHNIK GMBH, D-52134 Herzogenrath (DE)
(72) Erfinder: Kreuter, Peter, Dr.-Ing., 52072 Aachen (DE); Heuser, Peter, Dr.-Ing., 52076 Aachen (DE)
(74) Vertreter: Barske, Heiko, Dr. rer. nat.

(56) Entgegenhaltungen:
- EP-A- 0 676 533
- DE-A- 3 741 720
- FR-A- 2 512 493
- GB-A- 364 945
- GB-A- 589 642
- US-A- 4 974 566

## Beschreibung

Die Erfindung betrifft eine Hubkolbenbrennkraftmaschine mit wenigstens einem Zylinder gemäß dem Oberbegriff des Hauptanspruchs.

Eine gattungsgemäße Hubkolbenbrennkraftmaschine ist aus der US-PS 4,974,566 bekannt. Bei dieser Brennkraftmaschine münden in den Zylinder zwei Einlaßkanäle, deren Wände derart gestaltet sind, daß bei kleinen Ventilhüben der der Strömung durch die Einlaßkanäle zur Verfügung stehende Einströmquerschnitt in einem Winkelbereich um die Bewegungsachse der Einlaßventil herum derart gezielt verengt ist, daß bei kleinen Ventilhüben eine Tumbleströmung (Wirbelachse etwa senkrecht zur Achse des Zylinders) erzeugt wird, wohingegen bei großen Ventilhüben um den gesamten Umfang der Ventile ein Einströmquerschnitt zur Verfügung steht, der eine gute Füllung des Zylinders ermöglicht. Im Teillastbereich wird die Brennkraftmaschine mit kleinem Ventilhub betrieben, so daß infolge der ausgeprägten Tumbleströmung gute thermodynamische Brennbedingungen herrschen. Im Bereich großer Lasten wird die Brennkraftmaschine mit vollen Ventilhüben betrieben, wodurch ausreichende Füllung und Drehmoment erzielt wird.

Eine Vorrichtung, mit der Hub und/oder die Öffnungsdauer von Ventilen kontinuierlich verstellbar ist, ist aus der DE 43 01 453 A1 bekannt und in Fig. 12 schematisch dargestellt. Die Nockenscheiben von zwei Nockenwellen 1 und 2 wirken auf Abgriffskörper 4 und 5. Der Abgriffskörper 5 ist an einem Schwinghebel 7 ausgebildet, der ein Einlaßventil 8 einer nicht dargestellten Hubkolbenbrennkraftmaschine betätigt. Der Schwinghebel 7 ist bei P 2 an einem Anlenkhebel 9 gelagert, der den anderen Abgriffskörper 4 trägt und bei P 1 gestellfest gelagert ist. Eine Druckfeder 11 sorgt dafür, daß der Abgriffskörper 5 in ständiger Anlage an der Nockenkontur der Nockenwelle 2 ist und der Schwinghebel 7 ständig am Ventil 8 anliegt. Wie in der genannten Druckschrift im einzelnen erläutert, kann je nach Phasenlage der sich mit gleicher Geschwindigkeit drehenden Nockenwellen 1 und 2 die Öffnungsdauer und damit einhergehend der Hub des Einlaßventils innerhalb so weiter Grenzen variiert werden, daß bei einer mit einer solchen Vorrichtung ausgerüsteten Hubkolbenbrennkraftmaschine die Drosselklappe entfallen kann. Vorteilhaft ist, wenn eine der beiden Nockenwellen 1 oder 2 den Beginn der Öffnung des Einlaßventils 8 steuert und die andere der beiden Nockenwellen das Schließen des Einlaßventils 8 steuert. Wenn die Phase der die Öffnung steuernden Nockenwelle relativ zu einer Kurbelwelle konstant bleibt, läßt sich durch bloße Veränderung der Phase der das Schließen steuernden Nockenwelle relativ zu der die Öffnung steuernden Nockenwelle das Einlaßventil 8 derart steuern, daß bei im wesentlichen gleicher Öffnungflanke die Schließflanke sich von der Öffnungsflanke entfernt, so daß im leerlaufnahen Betrieb eine kurzzeitige Öffnung des Einlaßventils mit kleinem Hub erfolgt und diese Öffnung vergrößerbar ist, bis ein voller Hub mit anschließender Schließflanke erzielt wird. Eine typische Kurvenschar, die den Verlauf des Ventilhubs in Abhängigkeit von der Drehung der Kurbelwelle zeigt, ist in Fig. 13 dargestellt. Mit solchen Brennkraftmaschinen lassen sich durch Entfall der Drosselklappe erhebliche Kraftstoffeinsparungen erzielen.

Im Stand der Technik bekannt sind auch Vorrichtungen, mit denen sich bei konstantem Hub des Einlaßventils nur dessen Öffnungsdauer beeinflussen läßt, was beispielsweise mit Hilfe eines elektromagnetischen Ventiltriebs möglich ist.

Der Erfindung liegt die Aufgabe zugrunde, das Betriebsverhalten gattungsgemäßer Hubkolbenbrennkraftmaschinen weiter zu verbessern.

Diese Aufgabe wird mit den Merkmalen des Hauptanspruchs gelöst. Dadurch, daß der eine Einlaßkanal derart ausgebildet ist, daß er bei kleinen Ventilhüben nur in einem Winkelbereich um die Bewegungsachse dieses Einlaßventils herum verengt ist und der andere Einlaßkanal bei kleinen Ventilhüben um den gesamten Umfang in seinem Einströmquerschnitt verengt ist, wird bei kleinen Ventilhüben, d.h. insbesondere im Schwachlastbereich, die durch den nur in einem Winkelbereich verengten Einlaßkanal hindurch erfolgende Einströmung gezielt beschleunigt, so daß die Wirbelbildung bzw. Ladungsbewegung innerhalb des Zylinders zusätzlich verstärkt ist. Dadurch werden im Teillastbereich Gemischbildung und Verbrennung verbessert, Zündverzug und Brenndauer verkürzt sowie die Abmagerungsfähigkeit und die Restgasverträglichkeit erhöht. All dies bewirkt eine weitere Verbrauchssenkung bei gleichzeitig besserer Abgasqualität. Der Vollastbereich wird durch die Erfindung kaum beeinträchtigt, da der Einströmquerschnitt nur im Bereich kleiner Ventilhübe vermindert ist. Die Erfindung ist für Motoren mit äußerer oder innerer Gemischbildung ebenso einsetzbar wie für fremdgezündete oder selbstzündende Motoren, da eine gezielte Beeinflussung der Ladungsbewegung bei Schwachlast insgesamt vorteilhaft ist. Insbesondere ist die Erfindung vorteilhaft bei Otto-Motoren einsetzbar, deren Last durch unterschiedliche Hübe und/oder Öffnungsdauern des Einlaßventils gesteuert wird.

Die Unteransprüche sind auf vorteilhafte Ausführungsformen der erfindungsgemäßen Brennkraftmaschine gerichtet.

Die Erfindung wird im folgenden anhand schematischer Zeichnungen beispielsweise und mit weiteren Einzelheiten erläutert.

Es stellen dar:
- Fig. 1: eine seitliche Schnittansicht eines Zylinderkopfes zur Erläuterung der Wirbelbildung bei kleinem Ventilhub;
- Fig. 2: eine der Fig. 1 entsprechende Ansicht einer weiteren Ausführungsform,
- Fig. 3: eine Ansicht eines Zylinderkopfes aus einem Brennraum heraus,
- Fig. 4: eine der Fig. 3 ähnliche Ansicht einer abgeänderten Ausführungsform eines Zylinderkopfes,
- Fig. 5: eine Innenansicht eines Zylinderkopfes mit zwei Einlaßkanälen,
- Fig. 6: einen Schnitt in der Ebene VI-VI der Fig. 5,
- Fig. 7: eine Innenansicht eines gemäß der Erfindung gegenüber Fig. 5 abgeänderten Zylinderkopfes,
- Fig. 8: einen Schnitt längs der Linie VIII-VIII in Fig. 7,
- Fig. 9: eine schematische Ansicht eines fünfventiligen Zylinderkopfes,
- Fig. 10: eine schematische seitliche Schnittansicht eines der beiden seitlichen Einlaßventile der drei Einlaßventile gemäß Fig. 9,
- Fig. 11: eine seitliche Schnittansicht des mittleren der drei Einlaßventile der Fig. 10,
- Fig. 12: eine bereits beschriebene Skizze einer an sich bekannten Vorrichtung zur lastabhängigen Steuerung der Öffnungsfunktion eines Einlaßventils und
- Fig. 13: eine Schar von Ventilerhebungskurven.

Gemäß Fig. list in einem insgesamt mit 13 bezeichneten Zylinderkopf einer Hubkolbenbrennkraftmaschine ein Einlaßkanal 14 ausgebildet, in dessem Mündungsbereich in einen Brennraum 16 ein Einlaßventil 18 arbeitet. Der Ventilteller 20 des Einlaßventils liegt in Schließstellung des Ventils mit seiner Umfangsfläche 22 in an sich bekannter Weise an einer Sitzfläche 24 an, die in der Mündung des Einlaßkanals 14 in den Brennraum 16 ausgebildet ist.

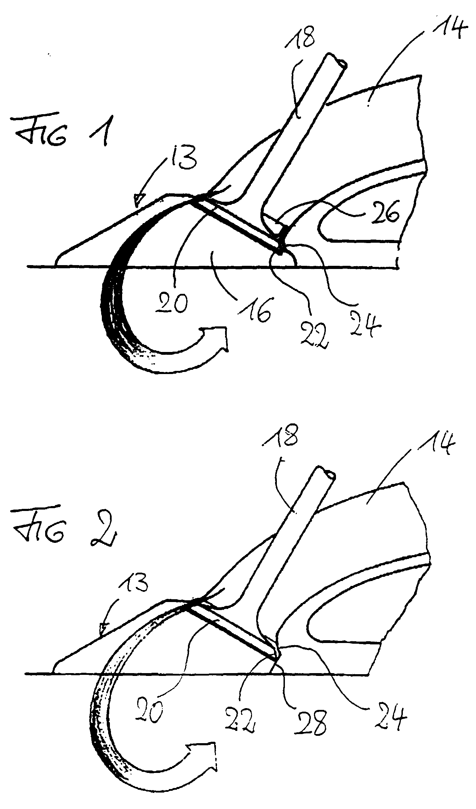

Wie aus Fig. 1 ersichtlich, ist der Ventilteller 20 in einem der Außenseite des Brennraums 16 zugewandten Winkelbereich mit einem Steg 26 versehen, der parallel zur benachbarten Innenfläche des Einlaßkanals 14 in geringem Abstand verläuft.

Mit der beschriebenen Anordnung wird folgendes erreicht:

Wenn sich das Einlaßventil 18 geringfügig, das heißt mit kleinem Hub, öffnet, wird der Einströmquerschnitt durch den geringen Abstand zwischen Steg 26 und Innenfläche des Einlaßkanals 14 weitgehend verschlossen, so daß die Einströmung gemäß Fig. 1 nur im oberen Bereich erfolgt, wodurch eine Tumble-Strömung entsteht, das heißt eine Einströmung der im Einlaßkanal 14 befindlichen Ladung tangential an der Oberseite des Brennraums unter Bildung eines Wirbels mit einer etwa senkrecht zur Achse des nicht dargestellten Zylinders gerichteten Wirbelachse. Bei größeren Ventilhüben, beispielsweise Ventilhüben von mehr als 20 bis 30 % des maximalen Ventilhubs, kommt der Steg 26 von der Wand des Einlaßkanals 14 frei, so daß dann eine Einströmung längs des gesamten Umfangs des Ventiltellers 20 erfolgt, die für eine gute Füllung des Brennraums sorgt. Die geschilderte Tumble-Strömung entsteht somit nur im Schwachlastbereich. Die geschilderte Beeinflussung der Ladungsbewegung ist auch bei Vorrichtungen wirksam, bei denen die Öffnungsdauer des Einlaßventils 18 lastabhängig verändert wird, da bei sehr kurzen Öffnungsdauern, gemessen an der Gesamtöffnungsdauer, die Zeitdauer zunimmt, während der der Einlaßquerschnitt verengt ist.

Durch die gezielte Intensivierung der Ladungsbewegung bzw. Vergrößerung der Strömungsenergie im Schwachlast- bzw. Teillastbereich wird die Einströmgeschwindigkeit vergrößert und die Ladungsbewegung gezielt bzw. gerichtet beeinflußt. Speziell in Verbindung mit einer Laststeuerung durch Beeinflussung auch des Ventilhubs kann dadurch die Gemischbildung und Verbrennung im Schwachlastbereich bei drosselklappenfreier Laststeuerung ganz erheblich verbessert werden. Zündverzug und Brenndauer können vermindert werden, wodurch der Wirkungsgrad steigt und damit der Verbrauch sinkt. Zusätzlich wird eine bessere Abmagerungsfähigkeit und Restgasverträglichkeit erreicht, wodurch sich ebenfalls der Verbrauch und/oder der Schadstoffgehalt im Abgas günstig beeinflussen lassen. Leistung und Drehmoment bei Vollast werden kaum beeinflußt.

Typische Ventilhübe, über die der Steg 26 wirksam ist, betragen zwischen etwa 0,5 mm und 3 mm, wenn der Vollhub des Einlaßventils 18 in der Größenordnung von 10 mm liegt.

Ein Nebeneffekt, der mit dem Steg 26 erzielt wird, liegt darin, daß sich innerhalb des Steges 26 auf dem Ventilteller Kraftstoff sammelt, der von der Strömung nicht unmittelbar in den Brennraum transportiert wird, so daß nicht die Gefahr besteht, daß Kraftstoff wandfilmartig unittelbar in den Brennraum 16 gelangt und dort die Verbrennung sowie den Schadstoffgehalt im Abgas nachteilig beeinflußt.

Typischerweise erstreckt sich der Steg 26 in einem Winkelbereich von 100° bis 220° um die Achse des Einlaßventils. Der Winkelbereich richtet sich nach der erwünschten Intensität der Tumble-Strömung.

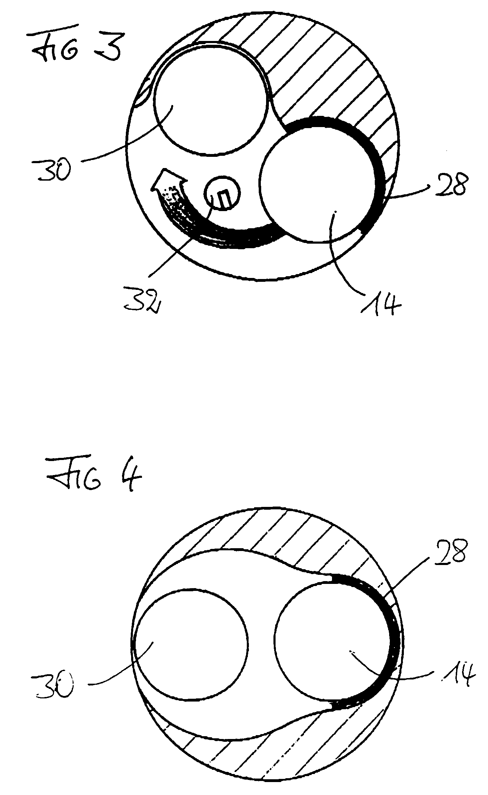

Fig. 2 zeigt eine gemäß Fig. 1 abgeänderte Ausführungsform. Der Unterschied liegt darin, daß die durch den Pfeil angedeutete Tumble-Strömung hier nicht mit Hilfe eines Steges 26 hervorgerufen wird, sondern dadurch, daß die Mündung des Einlaßkanals 14 an der Außenseite des Brennraums 16 bzw. nicht dargestellten Zylinders derart gestaltet ist, daß die Wand 28 des Einlaßkanals 14 stromabwärts der Sitzfläche 24 in diesem Bereich über eine einem kleinen Ventilhub entsprechende Strecke parallel zur Bewegungsrichtung des Einlaßventils 18 verläuft. Damit steht ähnlich wie bei der Ausführungsform gemäß Fig. 1 bei kleinen Ventilhüben ein Einströmquerschnitt nur im gemäß Fig. 2 oberen Bereich des Einlaßkanals 14 bzw. Brennraums 16 zur Verfügung.

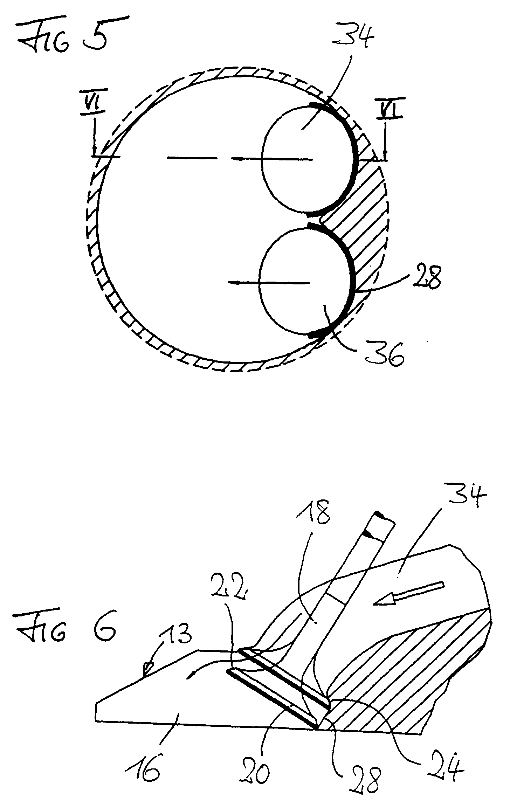

Fig. 3 zeigt aus dem Inneren des Zylinders bzw. von einem Arbeitskolben her gesehen eine Sicht auf den Zylinderkopf, wobei die dargestellte Umfangsfläche die des Zylinders ist. Sichtbar ist die Mündung des Einlaßkanals 14 und die Mündung eines Auslaßkanals 30. Ebenfalls sichtbar ist die Öffnung für eine Zündkerze 32.

Die schraffierte Fläche entspricht der Ausbildung des Zylinderkopfes derart, daß im oberen Totpunkt des Kolbens nur ein minimaler Spalt zwischen Kolben und schraffiertem Bereich gebildet ist. In dem dick schwarz eingezeichneten Umfangsbereich des Einlaßkanals 14 ist dessen Mündung mit einer Wand 28 ähnlich der Wand 28 gemäß Fig. 2 ausgebildet, so daß bei kleinen Hüben des nicht dargestellten Einlaßventils eine Einströmung in Richtung des Pfeils erfolgt, das heißt im wesentlichen tangential zur Außenwand des Zylinders unter Bildung eines Wirbels mit einer Achse in Richtung der Zylinderachse, das heißt eine Drall-Strömung. Die Drall-Strömung ist vorteilhafterweise derart gerichtet, daß sie den Bereich der Zündkerze 32 überstreicht.

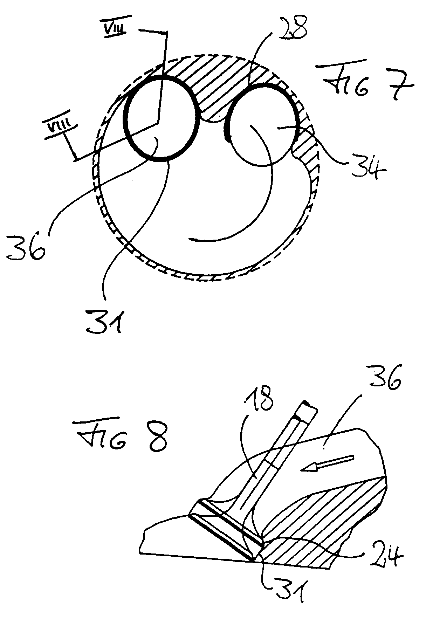

Fig. 4 unterscheidet sich von der Fig. 3 dahingehend, daß die schraffierten Flächen symmetrisch zur Verbindung zwischen Einlaßkanal 14 und Auslaßkanal 30 ausgebildet sind und die Wand 28, innerhalb der sich bei kleinem Ventilhub des Einlaßventils keine nennenswerte Einlaßströmung ausbilden kann, symmetrisch zur Verbindungslinie zwischen Einlaßkanal 14 und Auslaßkanal 30 an der Außenseite des Zylinders angeordnet ist. Entsprechend bildet sich bei der Ausbildung des Zylinderkopfes gemäß Fig. 4 eine Tumble-Strömung, wie in Fig. 2 dargstellt. Es versteht sich, daß auch bei den Ausführungsformen gemäß Fig. 3 und 4 die Wand 28 durch entsprechende Stege auf dem Einlaßventil ersetzt sein könnten.

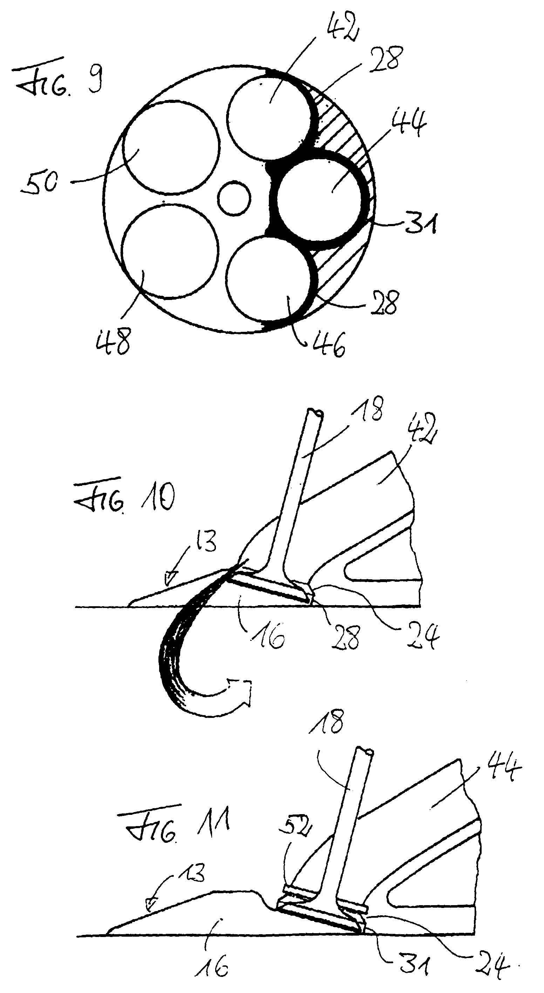

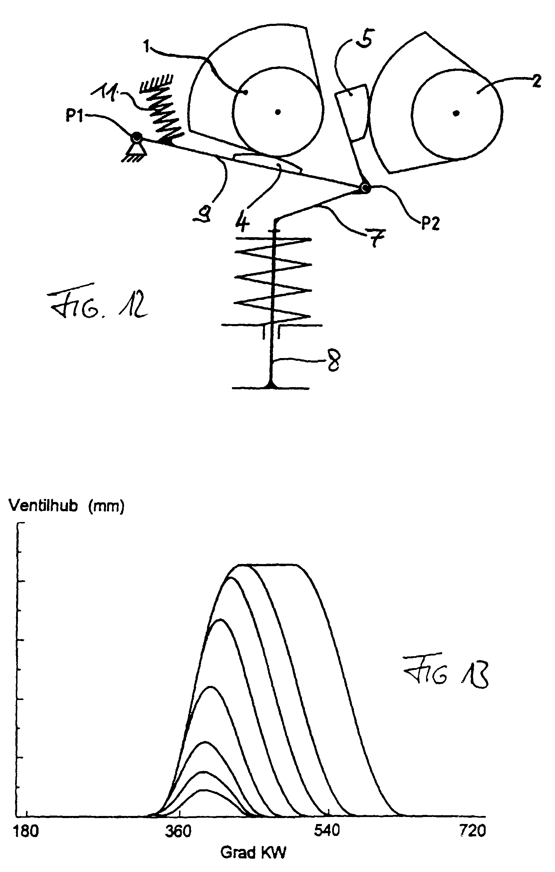

Fig. 5 zeigt eine Untenansicht eines Zylinderkopfes mit zwei Einlaßkanälen 34 und 36. Die Auslaßkanäle sind nicht dargestellt. Die schraffierte Fläche, die diejenige Fläche des Zylinderkopfes angibt, die dem Kolben in dessen oberem Totpunkt direkt benachbart ist und die als Quetschfläche dient, um der Zylinderladung im oberen Totpunkt des Kolbens eine Bewegung zu erteilen, ist hier symmetrisch zu einer Ebene ausgebildet, die zwischen dem Einlaßkanal 34 und dem Einlaßkanal 36 hindurch verläuft und die Achse des Zylinders enthält. Mit einer dicken dunklen Linie dargestellt ist wiederum der Wandbereich 28 der Einlaßkanäle 34 und 36, der sich zum Außenumfang des Zylinders hin von der Sitzfläche 24 parallel zur Bewegungslinie des Einlaßventils (Fig. 6) erstreckt und über einen Teil des Hubs dort den Einlaßquerschnitt verengt bzw. schließt.

Fig. 6 zeigt einen Schnitt in der Ebene VI-VI der Fig. 5, wobei das Einlaßventil 18 in geschlossener Stellung und einem geringen Hub entsprechender, teilweise geöffneter Stellung eingezeichnet ist. Deutlich sichbar ist, wie die Strömung in der teilweise geöffneten Stellung gemäß Fig. 6 im wesentlichen oberhalb des Einlaßventils 18 tangential zur Oberseite des Brennraums 16 einströmt, so daß infolge der zueinander symmetrischen Ausbildung beider Einlaßkanäle 34 und 36 im Brennraum eine Tumble-Strömung entsteht.

Die Fig. 7 und 8 zeigen eine gemäß der Erfindung gegenüber den Fig. 5 und 6 abgeänderte Ausführungsform eines Zylinderkopfes mit zwei Einlaßkanälen 34 und 36 bzw. Einlaßventilen 18.

Wie ersichtlich, ist die Wand 28 der Mündung des Einlaßkanals 34, die den Einlaßquerschnitt im Bereich geringer Ventilhübe verengt, derart ausgebildet, daß eine tangentiale Wirbelströmung in den Brennraum hinein entsteht. Der Mündungsbereich des Einlaßkanals 36, der in Fig. 8 längs der Linie VIII-VIII geschnitten dargestellt ist, ist dagegen derart ausgebildet, daß die Sitzfläche 24 insgesamt zurückversetzt ist, so daß die Wand 31 stromabwärts der Sitzfläche 24 zylinderartig ausgebildet ist und über einen Teil des Hubs des Ventils 18 keinen oder nur einen sehr kleinen Strömungsquerschnitt frei gibt. Damit wird erreicht, daß über kleine Ventilhübe, das heißt im Schwachlastbereich eine Drall-Strömung herrscht, deren Drall im Vollastbereich zunehmend schwächer wird und zu der die Einströmung durch den Einlaßkanal 36 hinzutritt.

Die Ausführungsformen gemäß Fig. 5 bis 8 mit jeweils zwei Einlaßventilen können hinsichtlich ihrer thermodynamischen Eigenschaften weiter verbessert werden, wenn die in den Einlaßöffnungen bzw. -kanälen 34 und 36 arbeitenden Einlaßventile individuell hinsichtlich ihres Hubs und/oder ihrer Öffnungsdauer gesteuert werden. Die Einströmverhältnisse und Brennbedingungen lassen sich auf diese Weise optimal an die jeweiligen Betriebserfordernisse anpassen.

Die Fig. 9, 10 und 11 zeigen die Anwendung der Erfindung für einen Fünfventil-Zylinderkopf mit drei Einlaßventilen bzw. Einlaßöffnungen oder -kanälen 42, 44 und 46 und zwei Auslaßöffnungen bzw. -kanälen 48 und 50.

Wie aus den Fig. 9 und 10 ersichtlich, sind die beiden äußeren Einlaßkanäle 42 und 46 mit Mündungen versehen, deren Wände 28 stromabwärts der Sitzflächen 24 derart ausgebildet sind, daß sie den Strömungsquerschnitt bei geringem Hub des Einlaßventils 18 in einem Winkelbereich von etwa 180° verengen, dessen Ränder in einer durch die Mitten der Mündungen der Einlaßkanäle 42 und 46 gehenden Ebene liegen. Dadurch entsteht ähnlich wie bei der Ausführungsform gemäß Fig. 5 im Schwachlast- bzw. Teillastbetrieb eine Tumble-Strömung, die von den Einlaßkanälen 42 und 46 ausgeht.

Die Mündung des mittleren Einlaßkanals 44 ist, wie in Fig. 11 dargestellt, mit der Sitzfläche 24 insgesamt vom Brennraum 16 weg versetzt, so daß stromab des Ventilsitzes eine zylindrische Wand 31 gebildet ist, die den Einlaßquerschnitt bei kleinen Ventilhüben im wesentlichen verschließt. Das dritte Einlaßventil, das bei Fünfventilmotoren meist eine andere Neigung relativ zur Zylinderachse hat wie die beiden äußeren Einlaßventile, wird somit erst bei größeren Ventilhüben bzw. Lasten wirksam, wodurch bei Teillast eine hohe Ladungsbewegung für gute Verbrennung und bei Vollast eine hohe Füllung gegeben sind.

Wie in Fig. 11 weiter ersichtlich, ist oberhalb der Sitzfläche 24 am mittleren Einlaßkanal 44 eine umlaufende Nut 52 vorgesehen, die dafür sorgt, daß kein Kraftstoff wandfilmartig in den Brennraum 16 gelangen kann. Eine solche Nut kann auch an den anderen Einlaßkanälen vorgesehen sein.

In Anwendungsfällen, bei denen bei Schwachlast bzw. Teillast eine besonders energiereiche Einströmung vorteilhaft ist, kann die Anordnung gemäß Fig. 9 bis 11 umgekehrt sein: Der mittlere Einlaßkanal 44 ist dann so ausgebildet, daß von ihm bei Schwachlast eine unmittelbar die Zündkerze erreichende Tumble-Strömung ausgeht, und die beiden äußeren Einlaßkanäle 42 und 46 sind so ausgebildet, daß sie bei kleinen Ventilhüben ganz oder im wesentlichen geschlossen bleiben.

In den Figuren sind die Einlaßkanäle jeweils so dargestellt, daß sie schräg von außen in den Zylinder bzw. Brennraum münden. Es versteht sich, daß auch Anordnungen mit parallel zur Zylinderachse gerichteten Ventilen möglich sind. Es versteht sich weiter, daß die dargestellten Ausführungsformen in vielfältiger Weise variiert werden können, beispielsweise indem im Schwachlastgebiet weder eine reine Tumble-Strömung noch eine reine Drall-Strömung, sondern eine Kombination aus beiden besteht. Die Tumble-Strömung hat gegenüber einer reinen Drall-Strömung im allgemeinen den Vorteil, daß weniger die Gefahr besteht, daß das Luftkraftstoffgemisch in Kerzennähe ausmagert.

## Patentansprüche

1. Hubkolbenbrennkraftmaschine enthaltend
wenigstens einen Zylinder, in dem ein Kolben arbeitet,
wenigstens zwei Einlaßkanäle (34, 36; 42, 44, 46) mit je einer Mündung in den Zylinder und einem in der Mündung angeordneten Ventilsitz, wobei mit jedem Ventilsitz ein Einlaßventil zusammenarbeitet, das in Schließstellung am Ventilsitz anliegt, und
eine Vorrichtung, mit der der Hub und/oder die Öffnungsdauer der Einlaßventile kontinuierlich veränderbar ist, wobei
die Wand eines (34; 42, 46) der Einlaßkanäle und/oder das diesem Einlaßkanal zugeordnete Einlaßventil derart gestaltet ist, daß bei kleinen Ventilhüben der der Strömung durch diesen Einlaßkanal zur Verfügung stehende Einströmquerschnitt in einem Winkelbereich um die Bewegungsachse dieses Einlaßventils herum gezielt verengt ist, so daß bei kleinen Ventilhüben eine gerichtete Einströmung mit erhöhter Geschwindigkeit erfolgt,
dadurch gekennzeichnet, daß
die Wand (31) eines anderen der Einlaßkanäle (36; 44) und/oder das diesem Einlaßkanal zugeordnete Einlaßventil über eine kleinen Ventilhüben entsprechende Strecke stromabwärts des Ventilsitzes (24) über den gesamten Umfang etwa parallel zur Bewegungsrichtung des Einlaßventils (18) derart ausgebildet ist, daß der Einströmquerschnitt dieses Einlaßkanals bei kleinen Ventilhüben zusätzlich verengt ist.

2. Hubkolbenbrennkraftmaschine nach Anspruch 1, dadurch gekennzeichnet, daß der bei kleinen Ventilhüben verengte Bereich des Einlaßströmungsquerschnitts des einen Einlaßkanals an der dem Zylinderumfang zugewandten Seite des Einlaßkanals (34, 36; 42, 46) ausgebildet ist.

3. Hubkolbenbrennkraftmaschine nach Anspruch 1 oder 2, dadurch gekennzeichnet, daß der bei kleinen Ventilhüben verengte Bereich des Einlaßströmungsquerschnitts des einen Einlaßkanals (34, 36; 42, 44, 46) derart ausgebildet ist, daß sich bei kleinen Ventilhüben eine Drall-Strömung ausbildet.

4. Hubkolbenbrennkraftmaschine nach einem der Ansprüche 1 bis 3, dadurch gekennzeichnet, daß
drei Einlaßkanäle (42, 44, 46) vorgesehen sind,
wobei die Wand (31) des mittleren (44) der Einlaßkanäle und/oder das diesem Einlaßkanal zugeordnete Einlaßventil über eine kleinen Ventilhüben entsprechende Strecke über den gesamten Umfang etwa parallel zur Bewegungsrichtung des Einlaßventils ausgebildet ist, so daß der Einströmquerschnitt dieses Einlaßkanals bei kleinen Ventilhüben zusätzlich verengt ist.

5. Hubkolbenbrennkraftmaschine nach einem der Ansprüche 1 bis 4,
dadurch gekennzeichnet, daß
drei Einlaßkanäle vorgesehen sind,
die Wände der beiden äußeren Einlaßkanäle und/oder die diesen zugeordneten Einlaßventile über ihren gesamten Umfang über eine kleinen Ventilhüben entsprechende Strecke etwa parallel zur Bewegungsrichtung der zugehörigen Einlaßventile derart ausgebildet sind, daß der Einströmquerschnitt der beiden äußeren Einlaßkanäle bei kleinen Ventilhüben zusätzlich verengt ist, und daß
der mittlere Einlaßkanal derart ausgebildet ist, daß bei kleinen Ventilhüben von ihm eine Tumble-Strömung ausgeht.

6. Hubkolbenbrennkraftmaschine nach einem oder mehreren der Ansprüche 1 bis 5, dadurch gekennzeichnet, daß der Bereich kleiner Ventilhübe etwa 5 % bis 30 % des mamaximalen Ventilhubs entspricht.

7. Hubkolbenbrennkraftmaschine nach einem oder mehreren der Ansprüche 1 bis 6, dadurch gekennzeichnet, daß der bzw. die Einlaßkanäle (34, 36; 42, 44, 46) von der Außenseite des Zylinders kommend schräg in den Zylinder mündet bzw. münden.

8. Hubkolbenbrennkraftmaschine nach einem oder mehreren der Ansprüche 1 bis 7, dadurch gekennzeichnet, daß der Ventilteller (20) des zur ventilhubabhängigen Beeinflussung der Einlaßströmung ausgebildeten Einlaßventils (18) mit einem Steg (26) ausgebildet ist.

## Claims

1. Reciprocating internal combustion engine containing
at least one cylinder in which a piston works,
at least two inlet channels (34, 36; 42, 44, 46) each having an opening into the cylinder, and a valve seat arranged in the opening, in which an inlet valve bearing on the valve seat in the closed position interacts with each valve seat, and
a device which can be used to vary the lift and/or the duration of opening of the inlet valves continuously, in which
the wall of one (34; 42, 46) of the inlet channels and/or the inlet valve associated with this inlet channel is designed such that, with short valve lifts, the inflow cross-section available to the flow through this inlet channel is deliberately constricted in an angular range around the axis of movement of this inlet valve, so that, with short valve lifts, a directed inflow occurs at a higher speed,
characterised in that
the wall (31) of another of the inlet channels (36; 44) and/or the inlet valve associated with this inlet channel is designed, over a section corresponding to short valve lifts downstream of the valve seat (24), over the entire perimeter approximately parallel to the direction of movement of the inlet valve (18), in such a way that the inflow cross-section of this inlet channel is additionally constricted in the case of short valve lifts.

2. Reciprocating internal combustion engine according to Claim 1, characterised in that that region of the inlet flow cross-section of one inlet channel which is constricted in the case of short valve lifts is designed to be on that side of the inlet channel (34, 36; 42, 46) which faces the cylinder perimeter.

3. Reciprocating internal combustion engine according to Claim 1 or 2, characterised in that that region of the inlet flow cross-section of one inlet channel (34, 36; 42, 44, 46) which is constricted in the case of short valve lifts is designed such that a swirling flow develops in the case of short valve lifts.

4. Reciprocating internal combustion engine according to one of Claims 1 to 3, characterised in that
three inlet channels (42, 44, 46) are provided,
in which the wall (31) of the central one (44) of the inlet channels and/or the inlet valve associated with this inlet channel is designed, over a section corresponding to short valve lifts, over the entire perimeter approximately parallel to the direction of movement of the inlet valve, so that the inflow cross-section of this inlet channel is additionally constricted in the case of short valve lifts.

5. Reciprocating internal combustion engine according to one of Claims 1 to 4,
characterised in that
three inlet channels are provided,
the walls of the two outer inlet channels and/or the inlet valves associated with the latter are designed, over their entire perimeter over a section corresponding to short valve lifts approximately parallel to the direction of movement of the associated inlet valves, such that the inflow cross-section of the two outer inlet channels is additionally constricted in the case of short valve lifts, and in that
the central inlet channel is designed such that it produces a tumble flow in the case of short valve lifts.

6. Reciprocating internal combustion engine according to one or more of Claims 1 to 5, characterised in that the region of short valve lifts corresponds to approximately 5% to 30% of the maximum valve lift.

7. Reciprocating internal combustion engine according to one or more of Claims 1 to 6, characterised in that the inlet channel or channels (34, 36; 42, 44, 46) opens or open obliquely into the cylinder, coming from the outside of the cylinder.

8. Reciprocating internal combustion engine according to one of more of Claims 1 to 7, characterised in that the valve disc (20) of the inlet valve (18) designed to influence the inlet flow depending on the valve lift is designed to have a web (26).

## Revendications

1. Moteur à combustion interne à pistons comprenant :
- au moins un cylindre dans lequel fonctionne un piston,
- au moins deux conduits d'admission (34, 36 ; 42, 44, 46) comprenant chacun une ouverture dans le cylindre et un siège de soupape disposé dans l'ouverture, où une soupape d'admission fonctionne avec chaque siège de soupape, laquelle soupape d'admission est en appui sur le siège de la soupape en position de fermeture, et
- un dispositif avec lequel la course et/ou la durée d'ouverture des soupapes d'admission est modifiable de façon continue,
où la paroi de l'un des conduits d'admission (34 ; 42, 46) et/ou la soupape d'admission associée à ce conduit d'admission est configurée de façon telle que, lors de faibles courses de la soupape, la section du flux entrant, disponible pour le flux traversant ce conduit d'admission, est rétrécie de façon appropriée dans une plage angulaire autour de l'axe de mouvement de cette soupape d'admission, de façon telle, que dans le cas de faibles courses de la soupape, il se produit un flux entrant dirigé de vitesse supérieure,
caractérisé
en ce que la paroi (31) d'un autre des conduits d'admission (36 ; 44) et/ou la soupape d'admission associée à ce conduit d'admission, sur une trajectoire correspondant à de faibles courses de la soupape, en aval du siège de soupape (24), sur toute la périphérie, est configurée en étant à peu près parallèle à la direction de mouvement de la soupape d'admission (18), de façon telle que la section du flux entrant de ce conduit d'admission est encore rétrécie dans le cas de faibles courses de la soupape.

2. Moteur à combustion interne à pistons selon la revendication 1, caractérisé en ce que la zone rétrécie, dans le cas de faibles courses de la soupape, de la section du flux entrant de l'un des conduits d'admission, est configurée sur le côté du conduit d'admission (34, 36 ; 42, 46), orienté vers la périphérie du cylindre.

3. Moteur à combustion interne à pistons selon la revendication 1 ou 2, caractérisé en ce que la zone rétrécie, dans le cas de faibles courses de la soupape, de la section du flux entrant de l'un des conduits d'admission (34, 36 ; 42, 44, 46) est configurée de façon telle qu'il se forme un flux turbulent dans le cas de faibles courses de la soupape.

4. Moteur à combustion interne à pistons selon l'une des revendications 1 à 3, caractérisé en ce que trois conduits d'admission (42, 44, 46) sont prévus,
où la paroi (31) du conduit d'admission (44) du milieu et/ou la soupape d'admission associée à ce conduit d'admission, sur une trajectoire correspondant à de faibles courses de la soupape, sur toute la périphérie, est configurée en étant à peu près parallèle à la direction de mouvement de la soupape d'admission, de façon telle que la section du flux entrant de ce conduit d'admission, dans le cas de faibles courses de la soupape, est encore rétrécie.

5. Moteur à combustion interne à pistons selon l'une des revendications 1 à 4, caractérisé
- en ce qu'il est prévu trois conduits d'admission,
où les parois des deux conduits d'admission extérieurs et/ou les soupapes d'admission associées à ces conduits d'admission, sur toute leur périphérie, sur une trajectoire correspondant à de faibles courses de la soupape, sont configurées en étant à peu près parallèles à la direction de mouvement des soupapes d'admission correspondantes, de façon telle que la section du flux entrant des deux conduits d'admission extérieurs est encore rétrécie dans le cas de faibles courses de la soupape, et
- en ce que le conduit d'admission du milieu est configuré de façon telle que, dans le cas de faibles courses de la soupape, un flux en nutation sort de ce conduit d'admission.

6. Moteur à combustion interne à pistons selon l'une ou plusieurs des revendications 1 à 5, caractérisé en ce que la zone des faibles courses de la soupape correspond à peu près à des valeurs comprises entre 5 % et 30 % de la course maximum de la soupape.

7. Moteur à combustion interne à pistons selon l'une ou plusieurs des revendications 1 à 6, caractérisé en ce que le ou les conduits d'admission (34, 36 ; 42, 44, 46) a ou ont une ouverture arrivant en oblique dans le cylindre, à partir du côté extérieur du cylindre.

8. Moteur à combustion interne à pistons selon l'une ou plusieurs des revendications 1 à 7, caractérisé en ce que la tête de soupape (20) de la soupape d'admission (18) configurée pour agir sur le flux entrant, en fonction de la course de la soupape, est configurée en comprenant une cloison (26).
